# EUROPÄISCHE PATENTANMELDUNG

(11) **EP 0 583 560 A2**
(43) Veröffentlichungstag der Anmeldung: **23.02.1994**
(21) Anmeldenummer: 93108429.7
(22) Anmeldetag: 25.05.1993
(51) Int. Cl.: F25B 49/02, H02P 7/632

(54) **Für Einphasenwechselstrom-Anschluss ausgestattetes Kühl- und/oder Gefriergerät**

(30) Priorität: 14.08.1992 DE 4226966
(71) Anmelder: BOSCH-SIEMENS HAUSGERÄTE GmbH, D-81669 München (DE)
(72) Erfinder: Graf, Richard, Dipl.-Ing., W-1000 Berlin 27 (DE); Kampet, Uwe, Dipl.-Ing., W-1000 Berlin 13 (DE); Hermann, Bernd-Peter, Dipl.-Ing., W-1000 Berlin 31 (DE)

(57) **Zusammenfassung**

Die Erfindung betrifft ein für Einphasenwechselstrom-Anschluß ausgestattetes Kühl- und/oder Gefriergerät, insbesondere Kühl- und/oder Gefriergerät für den typisch bestimmungsgemäßen Einsatz im Haushalt mit einem elektromotorisch angetriebenen Verdichter (V) innerhalb eines die Kühl- bzw. Gefriertemperaturen herbeiführenden Kühlkreislaufsystems mit Verflüssigerstrecke (VF) und Verdampferstrecke (VK,VG).

Dabei ist als Antriebsmotor für den Verdichter (V) ein Dreiphasendrehstrom-Motor (2) angeordnet und zur Strombeaufschlagung dieses Dreiphasendrehstrom-Motors ist ein elektronisch kältebedarfsabhängig angesteuerter Einphasenwechselstrom-Dreiphasendrehstrom-Frequenzumrichter (3) angeordnet.

## Beschreibung

Die Erfindung betrifft ein für Einphasenwechselstrom-Anschluß ausgestattetes Kühl- und/oder Gefriergerät, insbesondere Kühl- und/oder Gefriergerät für den typisch bestimmungsgemäßen Einsatz im Haushalt mit einem elektromotorisch angetriebenen verdichter innerhalb eines die Kühl- bzw. Gefriertemperatur herbeiführenden Kühlkreislaufsystems mit Verflüssigerstrecke und Verdampferstrecke.

Insbesondere in Räumen von privaten Wohnungen ist der Stromanschluß für Hausgeräte üblicherweise ausgelegt auf einen zweipoligen Einphasenwechselstrom-Anschluß von beispielsweise 230 V, wobei dieser Nominalwert in vorgegebenen Grenzen je Anschlußort unterschiedlich sein und auch je nach Belastung des Stromversorgungsnetzes zeitlich variieren kann.

Haushaltskühl- und/oder Gefriergeräte mit motorisch angetriebenem Kompressor arbeiten in der Weise, daß ein Verdichter ein Kältemittel aus einem Verdampfer ansaugt, wodurch dort das Kältemittel verdampft und dabei Wärme aufnimmt und aus der Umgebung entzieht. Die erforderliche Verdampfungswärme wird dem Kühlgut entzogen. Der durch den Verdichter adiabatisch komprimierte Dampf wird in einem Kondensator niedergeschlagen, wobei die Kompressions- und Kondensationswärme über den Verflüssiger an die dortige Umgebung abgegeben wird. Das verflüssigte Kältemittel im Verflüssiger wird schließlich über ein Drosselventil hin zum Verdampfer entspannt. Um das Kühlgut auf eine bestimmte Soll-Kühltemperatur abzukühlen, wird dem Kühlraum zunächst eine niedrigere zugeführt. Dann wird der elektromotorisch angetriebene Verdichter abgeschaltet. Steigt die Temperatur um eine bestimmte Temperaturdifferenz auf die der Soll-Kühltemperatur an, wird der Verdichter erneut eingeschaltet. Damit wird der Verdichter relativ häufig ein- und ausgeschaltet. Bei den Einschaltvorgängen treten je nach Betriebszuständen hohe Anlaufmomente auf, die den Motor, das Stromversorgungsnetz, den Verdichter und den gesamten Kühlkreis mehr oder weniger stark belasten und darüberhinaus geräuschintensiv in Erscheinung treten.

In diesem Zusammenhang ist aus der DE-Patentschrift 32 39 284 C2 bereits ein Drehstrom-Motor bekannt, der eine mit einem an eine Gleichstromquelle anlegbaren Dreiphasen-Wechselrichter zum Erzeugen von Drehstrom sowie mit einem Frequenzwandler zum Ansenken der Drehstromfrequenz unter eine bestimmte Nennfrequenz ausgerüstete Steuereinheit besitzt. Der vorbekannte Drehstrom-Motor ist für den Antrieb des Kältekompressors eines für den Einsatz in Fahrzeugen mit eigenem Gleichstrom-Bordnetz bestimmten Kälteaggregats verwendet, wobei die Drehstromfrequenz umgekehrt proportional zur Motorlast gesteuert ist. Damit wird zwar ein relativ gutes Anlaufverhalten des Motors erreicht. Eine Ansteuerung des Motors, die den besonderen Anforderungen an Geräten mit einem Kühlraum und einem Gefrierraum, wie sie typischer Weise im Haushaltsbereich eingesetzt werden, genügt, ist jedoch nicht vorgesehen.

Der Erfindung liegt daher die Aufgabe zugrunde, ein ein für den Anschluß an einen Einphasenwechselstrom bestimmtes Kühl- und/oder Gefriergerät der eingangs genannten Art anzugeben, das sowohl die Kühlvorgänge als auch die Gefriervorgänge energieeinsparend und mit in hohem Maße an den Temperatur- und/oder den Kältebedarf angepaßter Kühlleistung ermöglicht.

Ein für Einphasenwechselstrom-Anschluß geeignetes Kühl- und/oder Gefriergerät, das diesen Anforderungen in hohem Maße gerecht wird, ist erfindungsgemäß dadurch gekennzeichnet, daß als Antriebsmotor für den Verdichter ein Dreiphasendrehstrom-Motor und zur Strombeaufschlagung dieses Drehstrom-Motors ein elektronisch kältebedarfsabhängig gesteuerter Einphasenwechselstrom-Dreiphasendrehstrom-Frequenzumrichter angeordnet sind.

Das erfindungsgemäße Kühl- und/oder Gefriergerät ist wie üblich an die zweipolige Einphasen-Steckdose der Wechselstromversorgung anzuschließen und zeichnet sich durch ein gutes Anlaufverhalten und eine vergleichsweise geringe Geräuschentwicklung aus. Außerdem stellte diese Ausführungsform der Erfindung eine Voraussetzung für weitere, vorteilhafte Ausführungsformen dar.

Bei dem erfindungsgemäßen Kühl- und/oder Gefriergerät wird die Leistung seines Dreiphasendrehstrom-Motors relativ genau auf die Soll-Kühltemperatur des Kühlguts und des Gefrierguts abgestimmt. Eine nennenswerte Abkühlung auf eine Temperatur unterhalb der gesichert einzustellenden Soll-Kühltemperatur erfolgt nicht.

Der Dreiphasendrehstrom-Motor des erfindungsgemäßen Kühl- und/oder Gerfriergeräts läuft im Vergleich zu Motoren bekannter Kühlschränke nahezu ununterbrochen, mindestens jedoch ist der Motor des erfindungsgemäßen Kühl- und/oder Gefriergeräts über relativ lange Zeiten aktiviert. Trotz dieses Dauerbetriebes wird eine erhebliche Energieeinsparung erzielt, die bezogen auf vorbekannte Kühlschränke, in der Größenordnung bis zu 25 % liegt.

Ein weiterer Vorteil des erfindungsgemäßen Kühl- oder Gefriergeräts besteht in der Reduzierung der Schaltvorgänge. Die Reduzierung der Schaltvorgänge bringt zugleich eine Verringerung der subjektiv als störend empfundenen Geräuschbelästigung mit sich. Dies beruht zunächst darauf, daß Veränderungen im Geräuschpegelsubjekt störender empfunden werden als über längere Zeiten anstehende Dauerpegel. Ein weiterer Grund für die spürbar geringere Geräuschbelästigung des erfindungsgemäßen Kühlgeräts liegt darin, daß - anders als bei den vorbekannten Kühlgeräten - beim Ein- bzw. Ausschalten des Motors die Drehzahl kontinuierliche erhöht bzw. abgesenkt wird. Hierdurch ergibt sich das gute Anlaufverhalten.

Eine weitere vorteilhafte Ausführungsform besteht darin, daß die Aktivität des Kühlaggregats in vorgegebenen Phasen unterbrochen wird.

Mit dieser Maßnahme wird einer Vereisung entgegengewirkt bzw. ggf. gebildetes Eis abgebaut. Diesem Ziel dient auch eine weitere vorteilhafte Ausführungsform, die dadurch gekennzeichnet ist, daß die Förderrichtung durch den Verflüssiger in kurzfristigen Phasen umgedreht wird.

Weitere vorteilhafte Ausführungsformen der Erfindung sind in den Unteransprüchen gekennzeichnet.

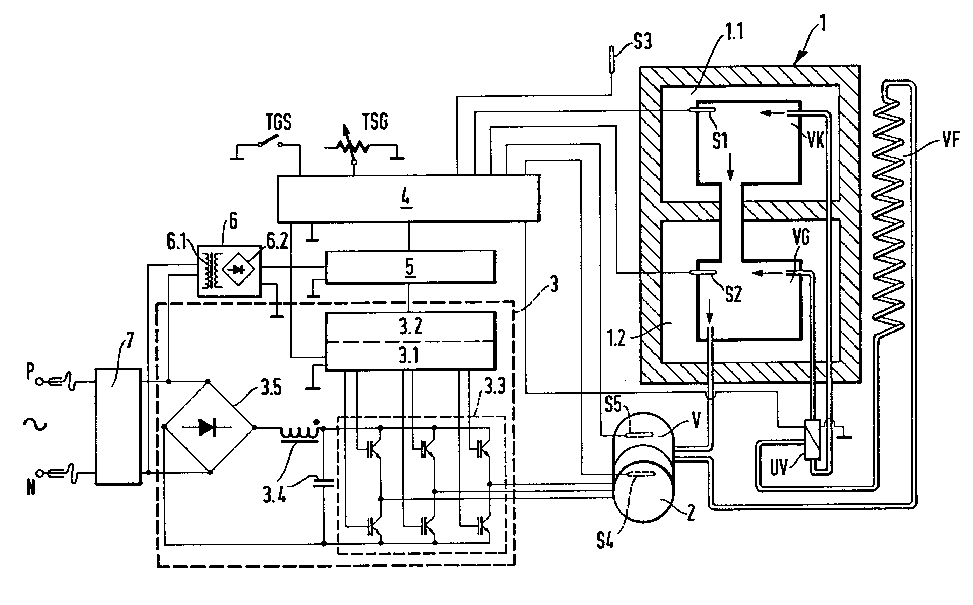

Ein nach Merkmalen der Erfindung ausgestaltetes Ausführungsbeispiel ist anhand der Zeichnung im folgenden näher beschrieben.

Die Figur zeigt eine schematisiert dargestellte Kühl-Gefrierkombination mit einem Blockschaltbild von Maßnahmen zur Ansteuerung des Verdichters.

Anstelle der Beschreibung eines Kühlschranks oder eines Gefrierschranks wird eine Kombination beschrieben, um beide Eigentümlichkeiten besser erfassen zu können. Die Kühl-Gefrier-Kombination 1 ist in einen Kühlraum 1.1 und einen Gefrierraum 1.2 aufgeteilt. Typische Soll-Temperaturen für den typisch bestimmungsgemäßen Einsatz im Haushalt betragen etwa 2 - 8°C für den Kühlraum und etwa 15 - 20°C für den Gefrierraum.

In an sich bekannter Weise ist für das Kühl- und Gefriergerät 1 ein Verdichter V innerhalb eines die Kühl- bzw. Gefriertemperaturen herbeiführenden Kühlkreislaufsystems mit Verflüssigerstrecke und zwei Verdampferstrecken vorgesehen.

Ein Kühlverdampfer VK führt in den Kühlraum 1.1 und ein Gefrierverdampfer VG führt in den Gefrierraum 1.2. Ein Umschaltventil UV stellt entweder eine Verbindung zwischen einem Verflüssiger VF und dem Kühl- oder Gefrierverdampfer her.

Der Verdichter V wird von einem Dreiphasendrehstrom-Motor 2 angetrieben. Angesteuert wird der Dreiphasendrehstrom-Motor 2 von einem elektrischen Einphasenwechselstrom-Dreiphasendrehstrom-Frequenzumrichter 3.

Dieser umfaßt eine Ansteuerlogik 3.1 mit einer Schutzschaltung 3.2 und eine Dreiphasen-Schaltstufe 3.3, der eine Glättungs-LC-Kombination 3.4 vorgeschaltet ist. Dieser Glättungs-LC-Kombination 3.4 ist ein Leistungsgleichrichter 3.5 vorgeschaltet.

Die Dreiphasen-Schaltstufe 3.3 besteht in an sich bekannter Weise aus einer dreistufigen Leistungs-Halbleiteranordnung, wobei jede Stufe zwei in Serie liegende steuerbare Leistungshalbleiter umfaßt.

Die beiden in Serie liegenden Leistungshalbleiter je einer Stufe sind wechselseitig in den Leit- und in den Sperrzustand geschaltet, so daß jeweils durch zyklisches Ansteuern der drei Stufen der Dreiphasen-Schaltstufe 3.3 aus dem dieser Dreiphasen-Schaltstufe 3.3 zugeführten Gleichstrom ein Dreiphasenwechselstrom generiert wird, welcher dem Dreiphasendrehstrom-Motor 2 zum Antrieb des Verdichters V zugeführt wird. Obwohl ein derartiger Motor ein asynchrones Verhalten beinhaltet, so ist er dennoch bestrebt, synchron mit der angelegten Drehstromfrequenz dem in ihm erzeugten Drehfeld zu folgen, wobei im eingeschwungenen Zustand lediglich der Rotor mit unterschiedlichem Nachlaufwinkel je nach Belastung dem aufgeprägten Drehfeld nacheilt. Somit ist die angelegte Frequenz in hohem Maße verantwortlich für die erzielte Antriebsgeschwindigkeit des Dreiphasendrehstrom-Motors und damit für die Leistung des Verdichters V und der davon abhängigen Kälteleistung des Systems.

Diese Ansteuerung, die in Abhängigkeit von Signalen eines Mikroprozessors 4 erfolgt, kann von entsprechenden Leistungssteuermodul vorgenommen werden, die im Handel sind.

Der Mikroprozessor 4 ist über eine Potential-Trennungsschaltung 5 und die Schutzschaltung 3.2 mit der Ansteuerlogik 3.1 des Frequenzumrichters 3 verbunden. Die Potentialtrennung erfolgt vorzugsweise unter Verwendung eines Optokopplers.

Für die Stromversorgung des Mikroprozessors 4, der Potentialtrennung 5 und der Ansteuerlogik 3.1 ist eine Stromversorgungseinheit 6 mit einem Transformator 6.1 und einem Gleichstromrichter 6.2 vorgesehen.

Der Leisstungsgleichrichter 3.5 und die Stromversorgungseinheit 6 sind eingangsseitig an eine Wechselspannungsquelle (230 V ) angeschaltet, wie sie tpyischerweise im Haushalt (Küche, Keller, usw.) verfügbar ist.

Zwischen Wechselspannungsquelle und Leistungsgleichrichter 3.5 bzw. Stromversorgungseinheit 6 ist eine Entstörungseinheit 7 zwischengeschaltet, der die insbesondere öffetnliche Stromversorgung von Störungen hochfrequenter Art aus dem Gerät weitestgehend abschottet, aber auch umgekehrt gegen derartige Störungen wirkt.

Der Mikroprozessor 4 ist mit einer Mehrzahl von Sensoren S1 - S5 verbunden. Der Sensor S1 ist im Kühlraum 1.1 und der Sensor S2 ist im Gefrierraum 1.2 angeordnet und bildet eine die aktuelle Kühlraum- bzw. Gefriertemperatur bezeichnende Information. Der Sensor S3 ermittelt die Außentemperatur und bildet eine entsprechende Information.

Der Sensor S4 ermittelt die Erwärmung des Motors 2 und ist hierzu entweder außen am Motorgehäuse oder auch im Motorinnenraum angeordnet.

Der Sensor S5 ist im Kompressorraum V angeordnet und ermittelt evtl. kritische Temperaturen. Der Sensor S5 oder ein weiterer Sensor im Kompressorraum ermittelt den vom Kompressor erzeugten und auf das Kältemittel wirkenden Druck.

Ein weiterer Sensor kann dem Mikroprozessor beispielsweise die Stromaufnahme des Motors 2 melden, insbesondere eine kritische, hohe Stromaufnahme, die ein Zeichen für ein Blockieren des Kompressors sein kann. Der Mikroprozessor ist dann in der Weise programmiert, daß ausgelöst durch eine entsprechende Meldung, der Motor abgeschaltet und ggf. eine Alarmmeldung (z.B. Aktivieren einer optischen Alarmanzeige) generiert wird.

Dem Mikroprozessor 4 sind ferner über Eingabeschalter (Tiefgefrierschalter TGS, Temperatur-Sollwertgeber TSG) weitere Informationen zuführbar, die beispielsweise die Soll-Kühlraum- und die Soll-Gefrierraumtemperatur bezeichnen. Außerdem können weitere Informationen in den Mikroprozessor eingegeben werden, die beispielsweise die Masse eines Kühlguts bzw. eines Gefrierguts und den Zeitpunkt bezeichnen, zu dem das Kühlgut bzw. das Gefriergut in den Kühlraum 1.1 bzw. in den Gefrierraum 1.2 eingeführt werden sollen. Auf diese Weise läßt sich der Kühlraum bzw. der Gefrierraum entsprechend der Kühlgut- bzw. der Gefriergutmasse vorkühlen.

Die von den Sensoren S1 - S5 gebildeten Informationen können jeweils einem entsprechenden Eingang des Mikroprozessors zugeführt werden. Alternativ ist vorgesehen, daß die von den Sensoren gebildeten Informationen gemultiplext nur einem Eingang des Mikroprozessors zugeführt wird.

Der Mikroprozessor steuert die Drehzahl des Dreiphasendrehstrom-Motors 2 entsprechend dem Kältebedarf, der sich aus den über die Eingabetasten eingegebenen Eingabewerten ergibt, in Relation zu den von den Sensoren ermittelten Parametern. Hier gehören, wie schon erwähnt, die aktuellen Temperaturen des Kühl- bzw. Gefrierraums und die Außentemperatur.

Der Mikroprozessor steuert im Zusammenwirken mit der Ansteuerlogik den Dreiphasendrehstrom-Motor 2 mit einer sehr geringen Schalthäufigkeit.

Bei den relativ seltenen Einschaltvorgängen wird die Drehzahl kontinuierlich auf die Nenndrehzahl erhöht, bei den Ausschaltvorgängen wird die Drehzahl kontinuierlich auf Null abgesenkt und alle gesteuerten Halbleiterelemente der Dreiphasen-Schaltstufe 3.3 werden gesperrt.

In Geräten mit einem Verflüssiger VF, einem ersten Verdampfer VK für den Kühlraum und einem zweiten Verdampfer VG für den Gefrierraum werden über ein Umschaltventil UV abwechselnd der erste und der zweite Verdampfer VK, VG beaufschlagt. Dabei wird für die Kühlung des Kühlraums eine relativ geringe und für die Kühlung des Gefrierraums eine relativ hohe Drehzahl gebildet. Der Kühlung des Gefrierraums wird gegenüber der Kühlung des Kühlraums grundsätzlich eine Priorität zugeordnet. Nach Ablauf vorgegebener Ansteuerungszeiten bezüglich des zweiten Verdampfers wird unabhängig von dem dem Mikroprozessor vorliegenden Gefrierraum-Temperaturwert der erste Verdampfer angesteuert, sofern sich für den Kühlraum ein Kühlungsbedarf ergibt (Sensoren S1, S3, Eingabewerte).

Der Mikroprozessor kann auch die verbleibende Schalthäufigkeit ermitteln und in diesem Zusammenhang in der Weise programmiert sein, daß bei zu großer (oder auch bei zu kleiner) Schalthäufigkeit durch Erhöhung oder Senkung der Drehzahl die Schalthäufigkeit auf Null reduziert oder auf sehr große Phasen ausgedehnt wird.

Die Ansteuerung des Dreiphasendrehstrom-Motors 2 ist auf den optimalen Drehzahlbereich abgestimmt, der durch den Kompressor und die Drossel im Kühlsystem bestimmt ist. Innerhalb dieses Drehzahlbereichs wird der Motor in einen Dauerlauf versetzt. Dabei ergibt sich der Vorteil, daß keine Untertemperatur benötigt wird, um eine Schalthysterese zu erzeugen.

Durch die kontinuierliche Erhöhung der Drehzahl bei den (wenigen) Einschaltvorgängen werden Belastungsstöße vermieden. Dies führt insgesamt zu einem leiseren Lauf.

Bei dem erfindungsgemäßen Kühl- und/oder Gefriergerät ist also vorgesehen, daß ein Wechselstrom-Dreiphasendrehstrom-Umrichter mit einem Dreiphasendrehstromgenerator zur Erzeugung einer veränderlichen Drehstromfrequenz angeordnet ist und daß der frequenzbestimmende Generator abhängig von den Kälteanforderungen in dem zu kühlenden Raum (1.1, 1.2) angesteuert ist.

Der frequenzbestimmende Generator kann weiterhin von Umfeld-Temperaturen über entsprechende Sensoren, z.B. S3 angesteuert werden und/oder auch leistungsbedarfsabhängig ansteuerbar sein. Schließlich ist der frequenzbestimmende Generator verdichterdaten- und/oder motordatenabhängig ansteuerbar (S5, S4).

Ferner können zumindest die Leistungsschaltstufen 3.3 der Umrichterschaltungssteuerung kältebeaufschlagt sein. Beispielsweise sind die Leistungsschaltstufen außerhalb des eigentlichen Kühlgeräts an einem Verdampferrohr angeflanscht oder innerhalb des Kühlgeräts angeordnet.

Ferner ist ein Temperatursensor (S1, S2, S3) mit einem Temperatur-Sollwertgeber (TGS) einer elektronischen Vergleichsstufe zugeordnet, die in Abhängigkeit einerseits vom erfaßten Unterschied zwischen Sensorwert für Kühl- bzw. Gefrierraum und dem Einstellwert und andererseits von im Kühl- oder Gefrierraum anzustrebenden Temperaturwerten die Ansteuerlogik bezüglich der Frequenz des von dem Drehstrom-Motor zugeführten Stroms beaufschlagt. Ferner ist vorgesehen, daß das Türschloß des Kühl- und Gefriergeräts mit einem das Öffnen und das Schließen detektierenden Sensor gekoppelt ist, der seinerseits elektrisch mit dem Mikroprozessor 4 verbunden ist. Der Mikroprozessor 4 ist dann beispielsweise in der Weise programmiert, daß ausgelöst durch das Öffnen der Tür, die Motordrehzahl erhöht und ausgelöst durch das Schließen der Tür, die Motordrehzahl verringert wird.

Die Erhöhung der Motordrehzahl kann auch nach Ablauf einer vorgebbaren Zeit nach dem Öffnen der Tür bewirkt werden, wenn nicht innerhalb dieser Zeit das Kühl- und Gefriergerät außer Betrieb genommen wird.

Der Mikroprozessor 4 ist ferner in der Weise programmiert, daß die Aktivität des Kühlaggregats in vorgegebenen Phasen unterbrochen ist. Ferner wird die Förderrichtung durch den Verflüssiger in kurzfristigen Phasen umgedreht.

## Patentansprüche

1. Für Einphasenwechselstrom-Anschluß ausgestattetes Kühl- und/oder Gefriergerät, insbesondere Kühl- und/oder Gefriergerät für den typisch bestimmungsgemäßen Einsatz im Haushalt mit einem elektromotorisch angetriebenen Verdichter innerhalb eines die Kühl- bzw. Gefriertemperaturen herbeiführenden Kühlkreislauf mit Verflüssigerstrecke und Verdampferstrecke, **dadurch gekennzeichnet,** daß als Antriebsmotor für den Verdichter (2) ein Dreiphasendrehstrom-Motor (2) und zur Strombeaufschlagung dieses Drehstom-Motors (2) ein elektronisch kältebedarfsabhängig gesteuerter Einphasenwechselstrom-Dreiphasendrehstrom-Frequenzumrichter (3) angeordnet sind.

2. Für den Einphasenwechselstrom-Anschluß ausgestattetes Kühl- und/oder Gefriergerät nach Anspruch 1, dadurch gekennzeichnet, daß ein Einphasenwechselstrom-Dreiphasendrehstrom-Umrichter (3) mit einem Dreiphasendrehstromgenerator mit Ansteuerlogik (3.1) zur Erzeugung einer veränderlichen Drehstromfrequenz angeordnet ist und daß die frequenzbestimmende Ansteuerlogik (3.1) abhängig von den Kühlanforderungen in dem zu kühlenden Raum (1.1, 1.2) angesteuert ist.

3. Für Einphasenwechselstrom-Anschluß ausgestattetes Kühl- und/oder Gefriergerät nach Anspruch 2, dadurch gekennzeichnet, daß die Ansteuerlogik (3.1) von anwendungs- und umfeldrelevanten, gespeicherten Daten frequenzbestimmend für den dem Dreiphasendrehstrom-Motor (2) zugeführten Strom angesteuert ist.

4. Für Einphasenwechselstrom-Anschluß ausgestattetes Kühl- und/oder Gefriergerät nach Anspruch 2, dadurch gekennzeichnet, daß die frequenzbestimmende Ansteuerlogik (3.1) von Umfeld-Temperaturen ansteuerbar ist.

5. Für Einphasenwechselstrom-Anschluß ausgestattetes Kühl- und/oder Gefriergerät nach Anspruch 4, dadurch gekennzeichnet, daß die frequenzbestimmende Ansteuerlogik (3.1) leistungsbedarfsabhängig ansteuerbar ist.

6. Für Einphasenwechselstrom-Anschluß ausgestattetes Kühl- und/oder Gefriergerät nach einem der Ansprüche 2 bis 5, dadurch gekennzeichnet, daß die frequenzbestimmende Ansteuerlogik (3.1) verdichterdaten- und/oder motordatenabhängig ansteuerbar ist.

7. Für Einphasenwechselstrom-Anschluß ausgestattetes Kühl- und/oder Gefriergerät nach einem der Ansprüche 2 bis 6, dadurch gekennzeichnet, daß ein Temperatursensor (S1, S2) mit einem Temperatursollwertgeber (TSG) einer elektronischen Vergleichstufe (4) zugeordnet ist, die in Abhängigkeit einerseits vom erfaßten Unterschied zwischen Sensorwert für Kühl- bzw. Gefrierraum (1.1, 1.2) und dem Einstellwert und andererseits von im Kühl- oder Gefrierraum (1.1, 1.2) anzustrebenden Temperaturwerten die Ansteuerlogik (3.1) bezüglich der Frequenz des von dem Drehstrom-Motor (2) zugeführten Stroms beaufschlagt.

8. Für Einphasenwechselstrom-Anschluß ausgestattetes Kühl- und/oder Gefriergerät nach Anspruch 7, dadurch gekennzeichnet, daß der im Kühl- bzw. Gefrierraum (1.1, 1.2) anzustrebende Temperaturwert ansteuertechnisch für die Ansteuerlogik (3.1) in Relation gesetzt ist zur diesen Raum umgebenden Außentemperatur.

9. Für Einphasenwechselstrom-Anschluß ausgestattetes Kühl- und/oder Gefriergerät nach einem der vorstehenden Ansprüche, dadurch gekennzeichnet, daß zumindest die Leistungsschaltsstufen (3.3) der Umrichterschaltungssteuerung (3) kältebeaufschlagt sind

10. Für Einphasenwechselstrom-Anschluß ausgestattetes Kühl- und/oder Gefriergerät nach einem der vorstehenden Ansprüche, dadurch gekennzeichnet, daß die Aktivität des Kühlaggregats in vorgegebenen Phasen unterbrochen ist.

11. Für Einphasenwechselstrom-Anschluß ausgestattetes Kühl- und/oder Gefriergerät nach einem der vorstehenden Ansprüche, dadurch gekennzeichnet, daß die Förderrichtung durch den Verflüässiger (VF) in kurzfristigen Phasen umgedreht wird.
